# EUROPÄISCHE PATENTSCHRIFT

(11) **EP 1 222 565 B1**
(45) Veröffentlichungstag und Bekanntmachung des Hinweises auf die Patenterteilung: **02.04.2003**
(21) Anmeldenummer: 00965823.8
(22) Anmeldetag: 30.08.2000
(51) Int. Cl.: G06F 17/00

(54) **VERFAHREN UND VORRICHTUNG ZUR SIMULATION VON BENUTZEREINGABEN**
METHOD AND DEVICE FOR SIMULATING USER INPUT DATA
PROCEDE ET DISPOSITIF POUR LA SIMULATION D'ENTREES UTILISATEUR

(30) Priorität: 30.08.1999 DE 19942645; 28.12.1999 DE 19964082
(43) Veröffentlichungstag der Anmeldung: 17.07.2002
(73) Patentinhaber: Datango AG, 10405 Berlin (DE)
(72) Erfinder: MAYER, Pavel, 10115 Berlin (DE); TRAMBEREND, Henrik, 10119 Berlin (DE); DAHLKE, Stefan, 10435 Berlin (DE); MESCHKAT, Steffen, 10119 Berlin (DE); PAULISCH, Patrick, 13409 Berlin (DE); ARTOPE, Alexander, 10119 Berlin (DE)
(74) Vertreter: Gross, Felix, Dr.
(86) Internationale Anmeldenummer: DE0003059
(87) Internationale Veröffentlichungsnummer: WO01016783

(56) Entgegenhaltungen:
- WO-A-95/29440
- DE-A- 19 714 345
- ABE T ET AL: "DISTRIBUTED COOPERATIVE CONTROL FOR SHARING APPLICATIONS BASED ON THE MERMAID MULTIPARTY AND MULTIMEDIA DESKTOP CONFERENCING SYSTEM" NEC RESEARCH AND DEVELOPMENT,JP,NIPPON ELECTRIC LTD. TOKYO, Bd. 34, Nr. 1, 1993, Seiten 122-131, XP000363016 ISSN: 0547-051X

## Beschreibung

Die Erfindung betrifft ein Verfahren zur Simulation von Benutzereingaben nach Anspruch 1, eine Vorrichtung zur Durchführung des Verfahrens nach Anspruch 10 und eine Vorrichtung zur Simulation von Benutzereingaben nach Anspruch 11.

Bei Datenverarbeitungssystemen, wie z.B. Computern für den Einsatz im Internet oder zur Ausführung von Anwendungsprogrammen, müssen komplexe Benutzereingaben ausgeführt werden. Diese bestehen meist aus einer Abfolge aufeinander abgestimmter Maus- und Tastatureingaben, mit denen auf dem Datenverarbeitungssystem ein bestimmtes Verarbeitungsergebnis erzielt werden soll.

Gerade unerfahrene Benutzer haben häufig Schwierigkeiten, die komplexen Benutzereingaben zu erlernen. Eine Möglichkeit zur Lösung dieses Problems ist es, die Benutzereingaben und der dabei erzielten Verarbeitungsergebnisse (z.B. Screenshots) aufzuzeichnen. Dabei ist nachteilig, daß Benutzereingaben und die Verarbeitungsergebnisse viel Speicherplatz benötigen.

Aus DE-A-197 14 345 ist ein Verfahren und eine entsprechende Vorrichtung zur Simulation von Benutzereingaben, die in einem ersten Datenverarbeitungssystem erfolgen, auf einem zweiten Datenverarbeitungssystem bekannt. Die Benutzereingaben, welche automatisch in einem Eingabedatensatz gespeichert werden, verändern den internen Zustand des ersten Datenverarbeitungssystems. Der Eingabedatensatz kann über ein Datennetz an ein zweites Datenverarbeitungssystem übertragen werden, wo er auf einer Ausgabeeinheit automatisch als Benutzereingabe wiedergegeben und verarbeitet wird.

Es ist aber erfahrungsgemäß nicht ausreichend, die Benutzereingaben an einem ersten Datenverarbeitungssystem aufzuzeichnen und auf einem zweiten Datenverarbeitungssystem wieder abzuspielen. Da die Systemzustände der beiden Datenverarbeitungssysteme nie völlig identisch sind, führt der Transfer dazu, daß das Verarbeitungsergebnis auf dem zweiten Datenverarbeitungssystem aufgrund der aufgezeichneten Benutzereingaben nach einiger Zeit erheblich von dem Zustand des ersten Datenverarbeitungssystems abweicht.

Der vorliegenden Erfindung liegt die Aufgabe zugrunde, ein Verfahren und Vorrichtungen zu schaffen, bei dem die Benutzereingaben und die Verarbeitungsergebnisse auf einem Datenverarbeitungssystem simuliert werden, wobei die für die Simulation zu übertragene Datenmenge möglichst gering sein soll.

Diese Aufgabe wird erfindungsgemäß durch ein Verfahren mit den Merkmalen des Anspruchs 1 gelöst.

Dabei werden Benutzereingaben automatisch in einem Eingabedatensatz gespeichert, d.h. die Aktionen eines Benutzers eines ersten Datenverarbeitungssystems werden registriert und in Form des Eingabedatensatzes gespeichert.

Die Benutzereingaben verändern den internen Zustand des ersten Datenverarbeitungssystems, wobei der veränderte interne Zustand automatisch durch einen Ergebnisdatensatz charakterisiert wird.

Unter einer Veränderung des Zustands wird hier verstanden, daß z.B. die Inhalte von Speichern des ersten Datenverarbeitungssystems verändert werden. Der Ergebnisdatensatz ist dabei eine Ansammlung von Befehlen und Informationen, die eine Darstellung des Verarbeitungsergebnisses z.B. als Bitmap ermöglicht. Da der Ergebnisdatensatz nur die Befehle enthält, ist er wesentlich kompakter und speichersparender als z.B. eine vollständige Darstellung des Verarbeitungsergebnisses als Bitmap.

Der Eingabedatensatz und der Ergebnisdatensatz werden an ein zweites Datenverarbeitungssystem übertragen. Zur Simulation der Datenverarbeitung des ersten Datenverarbeitungssystem wird der Eingabedatensatz auf einer Ausgabeeinheit des zweiten Datenverarbeitungssystems automatisch wiedergegeben und der interne Zustand des ersten Datenverarbeitungssystems wird automatisch durch eine Verarbeitung des Ergebnisdatensatzes auf dem zweiten Datenverarbeitungssystem hergestellt.

Durch die getrennte Behandlung von Eingabedatensatz und Ergebnisdatensatz ist es möglich, den Datenverarbeitungsvorgang auf dem ersten Datenverarbeitungssystems vollständig zu simulieren. Die Benutzeraktionen, die im Eingabedatensatz enthalten sind, werden wiedergeben, wobei die Wirkungen dieser Aktionen direkt aus dem Ergebnisdatensatz des ersten Datenverarbeitungsprogramms stammen; es wird also der komplette Kopie der Verarbeitungsvorgänge des ersten Datenverarbeitugnssystem auf dem zweiten Datenverarbeitungssystem wiedergegeben. Dabei wirken sich aber systemspezifische Unterschiede zwischen den Datenverarbeitungssystemen nicht aus, da die Datenverarbeitungsergebnisse direkt vom ersten Datenverarbeitungssystem stammen und nicht auf dem zweiten Datenverarbeitungsgerät neu berechnet werden.

Dadurch, daß nur kompakte Datensätze (Eingabedatensatz, Ergebnisdatensatz) übertragen werden, wird die effiziente Datenübertragung ermöglicht. Unter einem Datenverarbeitungssystem im Sinne dieser Erfindung wird sowohl ein Softwareals auch ein Hardwaresystem zur Datenverarbeitung verstanden.

In einer vorteilhaften Ausgestaltung des erfindungsgemäßen Verfahrens wird der Eingabedatensatz und / oder der Ergebnisdatensatz vor einer Ausführung auf dem zweiten Datenverarbeitungssystem in Zwischenspeichern des ersten Datenverarbeitungssystems und / oder des zweiten Datenverarbeitungssystems zwischengespeichert. Durch die Zwischenspeicherung ist es möglich, die beiden Datenverarbeitungssysteme entkoppelt zu betreiben, was die Flexibilität erhöht

Dabei ist es besonders vorteilhaft, wenn der Eingabedatensatz und der Ergebnisdatensatz mit Zeitmarkierung zur Synchronisation versehen werden. Ganz besonders vorteilhaft ist es, wenn der Ergebnisdatensatz und der Eingabedatensatz auf dem zweiten Datenverarbeitungssystem mittels der Zeitmarkierungen synchron zueinander wiedergegeben werden. Damit wird sichergestellt, daß die Benutzereingaben und die Verarbeitungsergebnisse mit dem zweiten Datenverarbeitungssystem so wiedergegeben werden, wie sie auf dem ersten Datenverarbeitungssystem erzeugt wurden.

Mit Vorteil verwendet mindestens ein Eingabedatensatz des erfindungsgemäßen Verfahrens Signale einer Tastatur, einer Maus und / oder einer Spracheingabevorrichtung. Damit lassen sich vielfältige Funktionen eines Datenverarbeitungssystems steuern.

Besonders vorteilhaft ist es, wenn mindestens ein Ergebnisdatensatz eine URL und / oder eine HTML-Query an eine Datenbank aufweist. Mit diesen kompakten Datenstrukturen ist es möglich, eine komplexe Struktur auf dem zweiten Datenverarbeitungssystem aufzubauen, ohne daß umfangreiche Daten vom ersten Datenverarbeitungssystem an das zweite Datenverarbeitungssystem übertragen werden.

In einer weiteren vorteilhaften Ausgestaltung des erfindungsgemäßen Verfahrens weist der Ergebnisdatensatz eine Textinformation mit einem Darstellungsattribut auf. Bei einem formatierten Text ist es speichermäßig günstiger, den Text mit Formatierungsbefehlen zu übertragen, als den formatierten Text als Bitmap zu übertragen.

Vorteilhaft ist es auch, wenn auf dem zweiten Datenverarbeitungssystem eine Folge von Eingabedatensätzen und Ergebnisdatensätzen verarbeitet wird. Damit lassen sich komplexe, auch langandauernde Benutzereingaben am ersten Datenverarbeitungssystem simulieren.

In einer ebenfalls vorteilhaften Ausgestaltung des erfindungsgemäßen Verfahrens sind das erste Datenverarbeitungssystem und das zweite Datenverarbeitungssystem auf einem Computer angeordnet. Damit können zuerst Benutzereingaben im ersten Datenverarbeitungssystem (z.B. einem Textverarbeitungsprogramm oder Webbrowser) eingegeben werden. Die gespeicherten Benutzereingaben und die Verarbeitungsergebnisse werden dann auf dem zweiten Datenverarbeitungssystem des gleichen Computers verarbeitet.

Die Aufgabe wird auch durch eine Vorrichtung mit den Merkmalen des Anspruchs 10 gelöst, mit der das erfindungsgemäße Verfahren durchführbar ist.

Auch wir die Aufgabe durch eine Vorrichtung mit den Merkmalen des Anspruchs 11 gelöst.

Mit einem Mittel zur Erfassung von Benutzereingaben an dem ersten Datenverarbeitungssystem und zur Bildung eines Eingabedatensatzes zur Charakterisierung der Benutzereingaben werden die Benutzereingaben in kompakter Form erfaßt.

Die durch die Benutzereingaben bewirkte Änderung des internen Zustandes des ersten Datenverarbeitugnssystems wird mit einem Mittel zur automatischen Charakterisierung des veränderten Zustands in einem Ergebnisdatensatz gespeichert.

Ein Übertragungsmittel dient zur Übertragung des Eingabedatensatzes und des Ergebnisdatensatzes an das zweite Datenverarbeitungssystem, auf dem die Simulation durchgeführt wird. Dazu dient ein Simulationsmittel zur automatischen Wiedergabe des Eingabedatensatzes auf einer Ausgabeeinheit des zweiten Datenverarbeitungssystems und ein Ausführungsmittel, mit dem der Zustand des ersten Datenverarbeitungssystems durch eine Verarbeitung des Ergebnisdatensatzes automatisch auf dem zweiten Datenverarbeitungssystem hersfellbar ist.

Die Erfindung wird nachfolgend unter Bezugnahme auf die Figuren der Zeichnungen an mehreren Ausführungsbeispielen näher erläutert. Es zeigen:
- Fig. 1: ein Flußdiagramm einer ersten Ausführungsform des erfindungsgemäßen Verfahrens;
- Fig. 2: ein Flußdiagramm einer zweiten Ausführungsform des erfindungsgemäßen Verfahrens;
- Fig. 3a: eine Ansicht einer HTML-Seite auf einem ersten Datenverarbeitungssystem vor einer Eingabe durch einen Benutzer;
- Fig. 3b: die Ansicht aus Fig. 3b nach einer Eingabe;
- Fig. 3c: die Ansicht eines veränderten Zustandes einer HTML-Seite nach Ausführung einer Funktion.

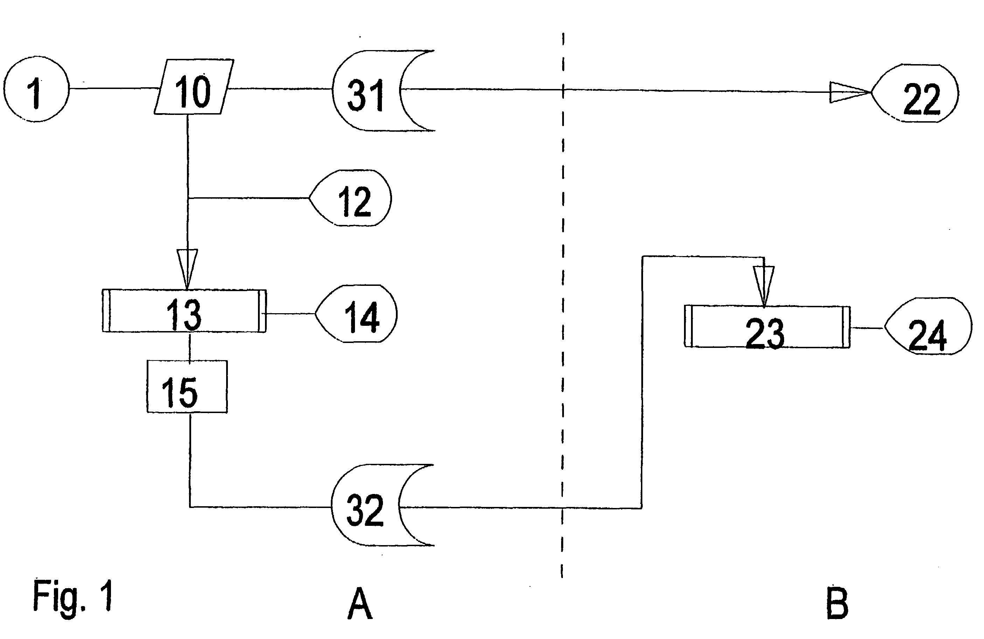

In Fig. 1 ist anhand eines Flußdiagramms die Funktionsweise einer ersten Ausführungsform des erfindungsgemäßen Verfahrens dargestellt. Auf der linken Seite der Darstellung sind schematisch die Verfahrensschritte in einem ersten Datenverarbeitungssystems A dargestellt, auf der rechten Seite die Verfahrensschritte in einem zweiten Datenverarbeitungssystem B.

Das erfindungsgemäße Verfahren dient dazu, die Reaktion des ersten Datenverarbeitungssystems A auf Benutzereingaben 1 mit dem zweiten Datenverarbeitungssystem B zu simulieren.

Simulieren heißt in diesem Zusammenhang, daß bestimmte Benutzereingaben 1 eines Benutzers (z.B. Mausoperationen) aufgezeichnet und dadurch erzeugte Ergebnisse (z.B. Bilder, Programmreaktionen etc.) des ersten Datenverarbeitungssystems A auf dem zweiten Datenverarbeitungssystem B wiedergegeben bzw. hergestellt werden.

Unter einem Datenverarbeitungssystem A, B wird hier eine Vorrichtung, ausgebildet als Hardware oder Software, verstanden, die geeignet ist, elektronische Daten zu verändern. Im vorliegenden Fall sollen als Datenverarbeitungssysteme A, B Programme dienen, die mit einem HTML-Dokument ein Formular aufbauen können, das auf einer Ausgabeeinheit (z.B. einem Bildschirm) eines Computers darstellbar ist. Im vorliegenden Beispiel laufen diese beiden Programme, d.h. die Datenverarbeitungssysteme A, B, auf einem Personal Computer. Grundsätzlich ist es aber auch möglich, die Datenverarbeitungssysteme A, B auf verschiedenen Rechnern zu betreiben, die z.B. über das Internet verbindbar sind.

Dabei wird erfindungsgemäß aus den Benutzereingaben 1 für das erste Datenverarbeitungssystem A automatisch ein Eingabedatensatz 10 erzeugt.

Die Benutzereingaben 1 bestehen im vorliegenden Fall aus Mausbewegungen, Maustastenaktivierungen und Tastatureingaben, die in das betreffende Formular manipulieren sollen. Der Eingabedatensatz 10 wird mit einem ersten Ausgabemittel 12 angezeigt, d.h. die Aktionen des Nutzers sind z.B. auf einem Bildschirm sichtbar. Als Ausgabemittel wird hier ein Mittel verstanden, das den Eingabedatensatz 10 auf einem Bildschirm darstellen kann. Dazu gehört insbesondere ein Bildschirmspeicher. Grundsätzlich wirken mehrere Ausgabemittel zusammen, um eine Darstellung auf einem Bildschirm zu erzeugen.

In Abhängigkeit von dem Eingabedatensatz 10 werden auf dem ersten Datenverarbeitungssystem A Funktionen des Formulars im ersten Rechenwerk 13 ausgeführt und die Datenverarbeitungsergebnisse mit einem zweiten Ausgabemittel 14 angezeigt.

Die Darstellung des Datenverarbeitungsergebnisses ist hier ein Bitmap eines veränderten Formulars, das auf einem Bildschirm dargestellt wird. Dieses Datenverarbeitungsergebnis in Form eines Bitmap benötigt einen relativ großen Speicherplatz.

Dem Datenverarbeitungsergebnis liegt jedoch ein automatisch vom Rechenwerk erzeugter Ergebnisdatensatz 15 zugrunde, der zusammen mit einem Webbrowser das Datenverarbeitungsergebnis in Form eines Bitmaps darstellt. Der Ergebnisdatensatz 15 umfaßt dabei nur die Steuerbefehle, die den Webbrowser dazu veranlassen, bestimmte Funktionen anzuzeigen; d.h. der Ergebnisdatensatz 15 dient dazu, eine Bitmap zu erstellen. Im Vergleich zu dem Bitmap benötigt der Ergebnisdatensatz 15 erheblich weniger Speicherplatz. Der Ergebnisdatensatz 15 kann dabei z.B. als das Ergebnis eines einzigen Mausklicks, aber auch das Ergebnis einer ganzen Folge von Benutzereingaben 1 enthalten, die hintereinander eine Abfolge von Bitmaps darstellen.

Für die Simulation der Benutzereingaben 1 für das erste Datenverarbeitungssystem A mit dem erfindungsgemäßen Verfahren wird der Eingabedatensatz 10 und der Ergebnisdatensatz 15 im ersten Datenverarbeitungssystem A zwischengespeichert; der Eingabedatensatz 10 im ersten Zwischenspeicher 31, der Ergebnisdatensatz 15 im zweiten Zwischenspeicher 32. Dabei werden der Eingabedatensatz 10 und der Ergebnisdatensatz 15 mit einer Zeitmarkierung versehen, so daß beide zu einem späteren Zeitpunkt synchronsierbar sind.

Anschließend werden der Eingabedatensatz 10 und der Ergebnisdatensatz 15 an -das zweite Datenverarbeitungssystem B übertragen.

Alternativ ist es auch möglich, den Eingabedatensatz 10 und den Ergebnisdatensatz 15 dann an das zweite Datenverarbeitungssystem B zu übertragen, wenn sie im ersten Datenverarbeitungssystem A generiert werden. Die Zwischenspeicher 31, 32 sind dann im zweiten Datenverarbeitungssystem B angeordnet.

Soll nun die Reaktion des ersten Datenverarbeitungssystems A auf die Benutzereingaben 1 auf den zweiten Datenverarbeitungssystems B simuliert werden, so stehen als Ausgangsdaten der übertragene bzw. zwischengespeicherte Eingabedatensatz 10 und der Ergebnisdatensatz 15 zur Verfügung. Dabei erfolgt die Simulation erfindungsgemäß so, daß der Eingabedatensatz 10 und der Ergebnisdatensatz 15 voneinander getrennt dargestellt werden. Getrennt heißt hier, daß der Eingabedatensatz 10 auf dem zweiten Datenverarbeitungssystem A durch ein drittes Anzeigemittel 22 dargestellt wird, ohne daß die eigentlich bezweckte Funktion der Benutzereingabe 1 ausgeführt wird. Diese Funktion wird dadurch simuliert, daß der Ergebnisdatensatz 15 in einem zweiten Rechenwerk 23 verarbeitet wird und mit einem vierten Anzeigemittel 24 dargestellt wird.

Durch die Zeitmarkierungen werden das dritte Ausgabemittel 22 und das vierte Ausgabemittel 24 so synchronisiert, daß die Darstellung des Eingabedatensatz 10 mit den auf dem ersten Datenverarbeitungssystem A erzielten Ergebnissen synchron verlaufen, d.h. ein Betrachter bekommt die Funktion des ersten Datenverarbeitungssystem A in realer Weise vorgespielt.

Somit kann das Verhalten des ersten Datenverarbeitungssystems A auf dem zweiten Datenverarbeitungssystem B simuliert werden, ohne daß viele speicherintensive Bitmaps übertragen werden müssen.

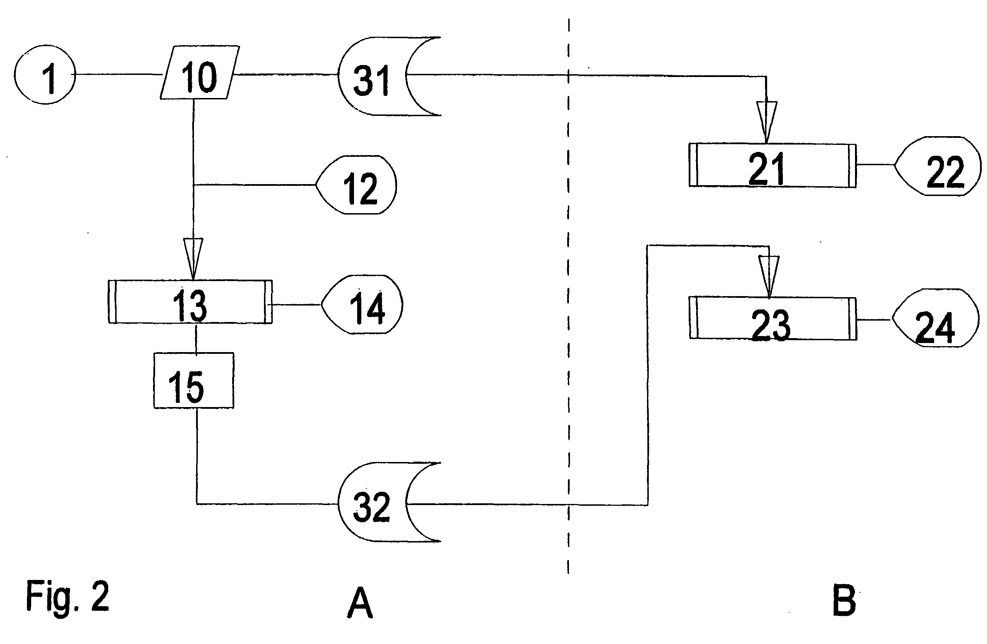

Eine zweite Ausführungsform des erfindungsgemäßen Verfahrens ist in Fig. 2 dargestellt. Der Grundaufbau des Verfahrens ist identisch zu dem Verfahren, das in Fig. 1 dargestellt wurde, so daß auf die entsprechende Beschreibung Bezug genommen wird. Insbesondere ist der Ablauf im ersten Datenverarbeitungssystem A identisch.

In Abänderung zur ersten Ausführungsform wird in der zweiten Ausführungsform eine Verarbeitung des Eingabedatensatzes 10 durchgeführt, nämlich im dritten Rechenwerk 21. Sobald dieser Eingabedatensatz 10 zu einer dauerhaften Änderung des Zustandes des zweiten Datenverarbeitungssystems B führt, werden diese nicht ausgeführt, sondern durch die Darstellung ersetzt, die sich aus dem Ergebnisdatensatz 15 ergibt.

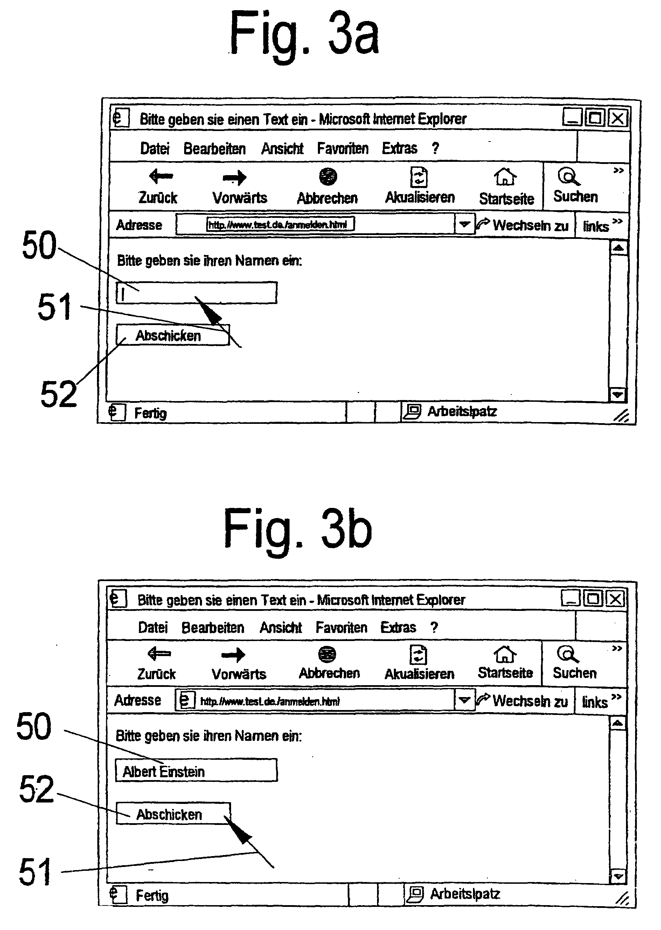

Das Konzept des Eingabedatensatzes 10 und des Ergebnisdatensatzes 15 wird anhand der Fig. 3a und 3b dargestellt.

Fig. 3a enthält eine Ansicht einer HTML-Seite auf einem Bildschirm, nämlich http://www.test.de/anmelden.htm. Diese Darstellung ist als Bitmap auf einem Bildschirm des ersten Datenverarbeitungssystems A dargestellt.

Diese HTML-Seite enthält aus Gründen der Übersichtlichkeit nur ein Eingabefeld 50. In dem vorgesehenen Eingabefeld 50 soll ein Name eingetragen werden. Dazu bewegt der Benutzer einen Mauscursor 51 in das Eingabefeld 50 und aktiviert es dadurch. Anschließend gibt er einen Namen ein, hier "Albert Einstein". Nach dem Eingeben wird der Mauscursor 51 auf eine Funktionsfläche 52 geführt. Dieser Zustand ist in Fig. 3b dargestellt. Durch ein Drücken einer Maustaste wird die der Funktionsfläche 52 zugeordnete Funktion ausgeführt.

Für das erfindungsgemäße Verfahren müssen die Benutzereingaben und die daraus resultierenden Zustandsänderungen des ersten Datenverarbeitungssystems A in einem Eingabedatensatz 10 und einen Ergebnisdatensatz 15 erfaßt werden.

Dies wird im folgenden dargestellt. Fig. 3a stellt dabei den Ausgangszustand dar, d.h. den Zustand des ersten Datenverarbeitungssystems A vor der ersten Benutzereingabe.

Die Aktivierung des Eingabefeldes 50 erfolgt durch eine Bewegung des Mauscursors 51 auf das Pixel mit den Fensterkoordinaten (224,182). Hier erfolgt ein Mausklick. Anschließend erfolgt das Drücken und Loslassen der Buchstabentasten. Der Mauscursor 51 wird dann auf die Bildschirmkoordinaten (100,240) geführt und es wird ein Mausklick ausgeführt.

Der Eingabedatensatz 10 stellt sich dann wie folgt dar (Die Zahlen in Klammern stellen die Fensterkoordinaten dar, Erläuterungen sind in eckige Klammern gesetzt):
Mauscursor nach Koordinaten 104,96
Mauscursor nach Koordinaten 122,91
Mauscursor nach Koordinaten 143,76
Mauscursor nach Koordinaten 200,140
Mauscursor nach Koordinaten 220,180
   [Mausbewegung in das Eingabefeld]
Mausklick bei (224, 182)
   [Mausklick in Eingabefeld]
Taste "A" gedrückt
Taste "A" losgelassen
Taste "l" gedrückt
Taste "l" losgelassen
Taste "b" gedrückt
Taste "b" losgelassen
Taste "e" gedrückt
Taste "e" losgelassen
Taste "r" gedrückt
Taste "r" losgelassen
Taste "t" gedrückt
Taste "t" losgelassen
Taste " " gedrückt
Taste " " losgelassen
Taste "E" gedrückt
Taste "E" losgelassen
Taste "i" gedrückt
Taste "i" losgelassen
Taste "n" gedrückt
Taste "n" losgelassen
Taste "s" gedrückt
Taste "s" losgelassen
Taste "t" gedrückt
Taste "t" losgelassen
Taste "e" gedrückt
Taste "e" losgelassen
Taste "i" gedrückt
Taste "i" losgelassen
Taste "n" gedrückt
Taste "n" losgelassen
Mauscursor nach (210,122)
Mauscursor nach (188,99)
Mauscursor nach (160,90)
Maustaste gedrückt bei (100,240)
   [Mausklick auf Funktionsfeld]

Nach der Ausführung der Funktion des Funktionsfeldes 50 wird eine neue HTML-Seite geholt, nämlich:
"http://www.test.de/anmelden2.htm?Albert%20Einstein"

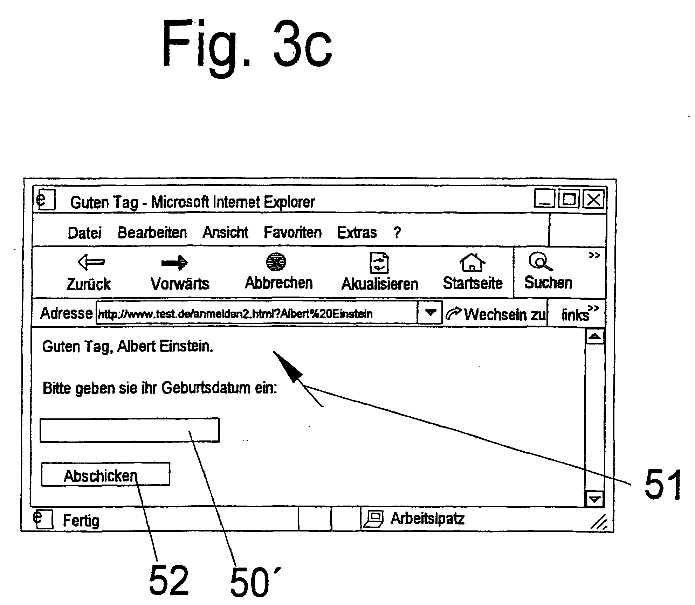

Diese Seite ist in Fig. 3c dargestellt. Hier soll in ein neues Eingabefeld 50' ein neue Eingabe gemacht werden.

Somit ist der Zustand des ersten Datenverarbeitungssystems A dauerhaft geändert, denn es wird eine neue HTML-Seite angezeigt, die jetzt wieder Ausgangspunkt für eine neue Zustandsänderung ist, wenn der Benutzer eine neue Eingabe macht (z.B. ein Geburtsdatum eingibt).

Erfindungsgemäß wird nicht eine Bitmap der ganzen neuen Seite gespeichert, um diese auf dem zweiten Datenverarbeitungssystem B darzustellen. Vielmehr wird ein Ergebnisdatensatz 15 erstellt, der den veränderten. Zustand des ersten Datenverarbeitungssystems A charakterisiert.

Der Ergebnisdatensatz 15 enthält daher den String:
"http://www.test.de/anmelden2.htm?Albert%20Einstein"

Dieser String beansprucht wesentlich weniger Speicherplatz als ein Bitmap der Bildschirmdarstellung.

Erfindungsgemäß werden nun der Eingabedatensatz 10 und der Ergebnisdatensatz 15 auf dem zweiten Datenverarbeitungssystem B wiedergegeben. Die Bewegungen der Maus und die Tastatureingaben werden aus dem Eingabedatensatz 10 entnommen und angezeigt. Sobald der Mausklick auf die Funktionsfläche 52 erfolgt ist, wird der Inhalt des Ergebisdatensatzes dazu 15 verwendet eine bestimmte HTML-Seite (siehe Fig. 3c) auf den Bildschirm zu holen, nämlich die, die im Ergebnisdatensatz 15 angegeben ist.

Das Beispiel bezieht sich hier-auf HTML-Seiten, ist aber auch auf andere Daten (z.B. Texte einer Textverarbeitung) anwendbar, auf die Formtierungsfunktionen angwandt werden sollen.

Die Erfindung beschränkt sich in ihrer Ausführung nicht auf die vorstehend angegebenen bevorzugten Ausführungsbeispiele. Vielmehr ist eine Anzahl von Varianten denkbar, die von dem erfindungsgemäßen Verfahren und der erfindungsgemäßen Vorrichtung auch bei grundsätzlich anders gearteten Ausführungen Gebrauch machen.

## Patentansprüche

1. Verfahren zur Simulation von Benutzereingaben (1), die in einem ersten Datenverarbeitungssystem (A) erfolgen, auf einem zweiten Datenverarbeitungssystem (B), wobei
a) die Benutzereingaben (1) automatisch in einem Eingabedatensatz (10) gespeichert werden, und
b) die Benutzereingaben (1) den internen Zustand des ersten Datenverarbeitungssystems (A) verändern,
c) der veränderte interne Zustand des ersten Datenverarbeitungssystems (A) automatisch durch einen Ergebnisdatensatz (15) charakterisiert wird, und
d) der Eingabedatensatz (10) und der Ergebnisdatensatz (15) an das zweite Datenverarbeitungssystem (B) übertragen werden, und
e) der Eingabedatensatz (10) auf einer Ausgabeeinheit des zweiten Datenverarbeitungssystems (B) automatisch wiedergegeben wird, und
f) der veränderte interne Zustand des ersten Datenverarbeitungssystems (A) durch eine Verarbeitung des Ergebnisdatensatzes (15) auf dem zweiten Datenverarbeitungssystem (B) automatisch hergestellt wird.

2. Verfahren nach Anspruch 1, **dadurch gekennzeichnet, daß** der Eingabedatensatz (10) und / oder der Ergebnisdatensatz (15) vor einer Ausführung auf dem zweiten Datenverarbeitungssystem (B) in Zwischenspeichern (31, 32) des ersten Datenverarbeitungssystems (A) und / oder des zweiten Datenverarbeitungssystems (B) zwischengespeichert werden.

3. Verfahren nach Anspruch 1 oder 2, **dadurch gekennzeichnet, daß** der Eingabedatensatz (10) und der Ergebnisdatensatz (15) mit Zeitmarkierungen zur synchronen Wiedergabe auf dem zweiten Datenverarbeitungssystem versehen werden.

4. Verfahren nach Anspruch 3, **dadurch gekennzeichnet, daß** der Ergebnisdatensatz (15) und der Eingabedatensatz (10) auf dem zweiten Datenverarbeitungssystem mittels der Zeitmarkierungen synchron zueinander wiedergegeben werden.

5. Verfahren nach einem der vorhergehenden Ansprüche, **dadurch gekennzeichnet, daß** mindestens ein Eingabedatensatz (10) Signale einer Tastatur, einer Maus und / oder einer Spracheingabevorrichtung enthält.

6. Verfahren nach einem der vorhergehenden Ansprüche, **dadurch gekennzeichnet, daß** mindestens ein Ergebnisdatensatz (15) eine URL und / oder eine HTML-Query an eine Datenbank aufweist.

7. Verfahren nach einem der vorhergehenden Ansprüche, **dadurch gekennzeichnet, daß** der Ergebnisdatensatz (15) eine Textinformation mit einem Darstellungsattribut aufweist.

8. Verfahren nach einem der vorhergehenden Ansprüche, **dadurch gekennzeichnet, daß** auf dem zweiten Datenverarbeitungssystem (B) eine Folge von Eingabedatensätzen (10) und Ergebnisdatensätzen (15) verarbeitet wird.

9. Verfahren nach einem der vorhergehenden Ansprüche, **dadurch gekennzeichnet, daß** das erste Datenverarbeitungssystem (A) und das zweite Datenverarbeitungssystem (B) auf demselben Computer angeordnet sind.

10. Vorrichtung zur Durchführung des Verfahrens nach einem der Ansprüche 1 bis 9.

11. Vorrichtung zur Simulation von Benutzereingaben (1), die in einem ersten Datenverarbeitungssystem (A) erfolgen, auf einem zweiten Datenverarbeitungssystem (B), mit
a) einem Mittel zur Erfassung von Benutzereingaben
(1) in das erste Datenverarbeitungssystem (A) und zur Bildung eines Eingabedatensatzes (10) zur Charakterisierung der Benutzereingaben (1),
b) einem Mittel zur automatischen Charakterisierung des durch die Benutzereingaben (1) veränderten internen Zustands des ersten Datenverarbeitungssystems (A) durch einen Ergebnisdatensatz (15),
c) einem Übertragungsmittel zur Übertragung des Eingabedatensatzes (10) und des Ergebnisdatensatzes (15) an das zweite Datenverarbeitungssystem (B),
d) einem Simulationsmittel zur automatischen Wiedergabe des Eingabedatensatzes (10) auf einer Ausgabeeinheit des zweiten Datenverarbeitungssystems (B) und
e) einem Ausführungsmittel, mit dem der veränderte interne Zustand des ersten Datenverarbeitungssystems (A) durch eine Verarbeitung des Ergebnisdatensatzes (15) automatisch auf dem zweiten Datenverarbeitungssystem (B) herstellbar ist.

## Claims

1. Method for simulating user input data (1) which take place in a first data processing system (A) on a second data processing system (B) wherein
a) the user input data (1) are automatically stored in an input data file (10), and
b) the user input data (1) change the internal state of the first data processing system (A),
c) the changed internal state of the first data processing system (A) is automatically **characterised by** a result data file (15) and
d) the input data file (10) and the result data file (15) are transferred to the second data processing system (B), and
e) the input data file (10) is automatically reproduced on an output unit of the second data processing system (B) and
f) the changed internal state of the first data processing system (A) is produced automatically by processing the result data file (15) on the second data processing system.

2. Method according to claim 1, **characterised in that** the input data file (10) and/or the result data file (15) are temporarily stored before execution on the second data processing system (B) in intermediate memories (31, 32) of the first data processing system (A) and/or of the second data processing system (B).

3. Method according to claim 1 or 2, **characterised in that** the input data file (10) and the result data file (15) are provided with time markings for synchronised reproduction on the second data processing system.

4. Method according to claim 3, **characterised in that** the result data file (15) and the input data file (10) are produced synchronised with each other on the second data processing system by means of the time markings.

5. Method according to one of the preceding claims, **characterised in that** at least one input data file (10) contains signals of a keyboard, mouse and/or speech input device.

6. Method according to one of the preceding claims, **characterised in that** at least one result data file (15) has a URL and/or HTML query to a data bank.

7. Method according to one of the preceding claims, **characterised in that** the result data file (15) has text information with representation attribute.

8. Method according to one of the preceding claims, **characterised in that** a sequence of input data files (10) and result data files (15) are processed on the second data processing system (B).

9. Method according to one of the preceding claims, **characterised in that** the first data processing system (A) and the second data processing system (B) are disposed on the same computer.

10. Apparatus for carrying out the method according to one of claims 1 to 9.

11. Apparatus for simulating user input data (1) which take place in a first data processing system (A) on a second data processing system (B), with
a) means for detecting user inputs (1) into the first data processing system (A) and for forming an input data file (10) for characterising the user inputs (1)
b) means for automatically characterising the internal state of the first data processing system (A) changed by the user inputs (1) through a result data file (15),
c) transfer means for transferring the input data file (10) and the result data file (15) to the second data processing system (B)
d) simulation means for automatically reproducing the input data file (10) on an output unit of the second data processing system (B) and
e) execution means with which the changed internal state of the first data processing system (A) can be produced automatically on the second data processing system (B) through processing the result data file (15).

## Revendications

1. Procédé pour la simulation d'entrées (1) d'utilisateur, qui sont exécutées dans un premier système de traitement de données (A), dans un second système de traitement de données (B), selon lequel
a) les entrées (1) d'utilisateur sont mémorisées automatiquement dans un ensemble de données d'entrée (10), et
b) les entrées (1) d'utilisateur modifient l'état interne du premier système de traitement de données (A),
c) l'état interne modifié du premier système de traitement de données (A) est caractérisé automatiquement par un ensemble de données de résultat (15), et
d) l'ensemble de données d'entrée (10) et l'ensemble de données de résultat (15) sont transmis au second système de traitement de données (B), et
e) l'ensemble de données d'entrée (10) est reproduit automatiquement sur une entrée de sortie du second système de traitement de données (B), et
f) l'état interne modifié du premier système de traitement de données (A) est établi automatiquement par un traitement de l'ensemble de données de résultat (15) dans le second système de traitement de données (B).

2. Procédé selon la revendication 1, **caractérisé en ce que** l'ensemble de données d'entrée (10) et/ou l'ensemble de données de résultat (15) sont mémorisés temporairement, avant traitement dans le second traitement de données (B), dans des mémoires intermédiaire (31, 32) du premier système de traitement de données (A) et/ou du second système de traitement de données (B).

3. Procédé selon la revendication 1 ou 2, **caractérisé en ce que** l'ensemble de données d'entrée (10) et l'ensemble de données de résultat (15) sont pourvus de marques temporelles pour la reproduction synchrone dans le second système de traitement de données.

4. Procédé selon la revendication 3, **caractérisé en ce que** l'ensemble de données de résultat (15) et l'ensemble de données d'entrée (10) sont reproduits d'une manière synchrone entre eux dans le second système de traitement de données, au moyen des marques temporelles.

5. Procédé selon l'une des revendications précédentes, **caractérisé en ce qu'**au moins l'ensemble de données d'entrée (10) contient des signaux d'un clavier, d'une souris et/ou d'un dispositif d'entrée vocale.

6. Procédé selon l'une des revendications précédentes, **caractérisé en ce qu'**au moins un ensemble de données de résultat (15) comporte une URL et/ou une demande HTML-Query présentée à une banque de données.

7. Procédé selon l'une des revendications précédentes, **caractérisé en ce que** l'ensemble de données de résultat (15) comporte une information de texte possédant un attribut de représentation.

8. Procédé selon l'une des revendications précédentes, **caractérisé en ce qu'**une suite d'ensembles de données d'entrée (10) et l'ensemble de données de résultat (15) est traitée dans le second système de traitement de données (B).

9. Procédé selon l'une des revendications précédentes, **caractérisé en ce que** le premier système de traitement de données (A) et le second système de traitement de données (B) sont disposés dans le même ordinateur.

10. Dispositif pour la mise en oeuvre du procédé selon l'une des revendications 1 à 9.

11. Dispositif pour la stimulation d'entrées (1) d'utilisateur, qui sont effectuées dans un premier traitement de données (A), dans un second système de traitement de données (B), comportant
a) un moyen pour détecter les entrées (1) d'utilisateur entre les systèmes de traitement de données (A) et pour la formation d'un ensemble de données d'entrée (10) pour caractériser les entrées (1) d'utilisateur,
b) un moyen pour caractériser automatiquement l'état interne, modifié par les entrées (1) d'utilisateur, du premier système de traitement de données (A) par un ensemble de données de résultat (15),
c) un moyen de transmission pour transmettre l'ensemble de données d'entrée (10) et l'ensemble de données de résultat (15) au second système de traitement de données (B),
d) un moyen de simulation pour reproduire automatiquement l'ensemble de données d'entrée (10) dans une unité de sortie du second système de traitement de données (B), et
e) un moyen de traitement, au moyen duquel l'état interne modifié du premier système de traitement de données (A) peut être établi automatiquement dans le second système de traitement de données (B) par un traitement de l'ensemble de données de résultat (15).
